# EUROPÄISCHE PATENTSCHRIFT

(11) **EP 1 277 702 B1**
(45) Veröffentlichungstag und Bekanntmachung des Hinweises auf die Patenterteilung: **16.03.2011**
(21) Anmeldenummer: 02008078.4
(22) Anmeldetag: 11.04.2002
(51) Int. Cl.: C01F 7/02, C01F 7/30, D21H 19/38, C01B 33/18

(54) **Pyrogen hergestellte Aluminium-Silicium-Mischoxide, Dispersionen daraus hergestellt und dessen Verwendungen**
Pyrogenically prepared aluminium-silicon mixed oxide, dispersions prepared therefrom and its uses
Oxide mixte d'aluminium et de silicium préparé par voie pyrogénique, dispersions préparés a partir de ce oxide et ses utilisations

(30) Priorität: 20.07.2001 DE 10135452
(43) Veröffentlichungstag der Anmeldung: 22.01.2003
(73) Patentinhaber: Evonik Degussa GmbH, 45128 Essen (DE)
(72) Erfinder: Mangold, Helmut, Dr., 63517 Rodenbach (DE); Scharfe, Thomas, 63755 Alzenau (DE); Apel, Ronald, Dr., 79618 Rheinfelden (DE); Brandes, Ralf, Princeton NJ 08540 (US); Moster, Alfons, 79618 Rheinfelden (DE)

(56) Entgegenhaltungen:
- EP-A- 0 995 718
- DE-C- 4 035 089
- GB-A- 1 394 116
- US-A- 4 347 229
- US-A- 5 273 949
- US-B1- 6 183 719
- US-B1- 6 214 312

## Beschreibung

Die Erfindung betrifft neue pyrogen hergestellte Aluminium-Silicium-Mischoxide, das Verfahren zu ihrer Herstellung, die Herstellung entsprechender Dispersionen und ihre Verwendung als Komponente in Streichfarben für Inkjet-Medien.

Aus EP 0 023 588, EP 0 585 544 sowie EP 1 048 617 sind flammenhydrolytisch hergestellte pulverförmige Aluminium-Silicium-Mischoxide amorpher Struktur bekannt. So beschreibt EP 0 023 588 die Herstellung von Aluminium-Silicium-Mischoxiden mit einer BET-Oberfläche von 50 bis 200 m²/g und einem Aluminiumoxidgehalt von 0,5 bis 20 Gew.-%.

EP 0 585 544 beschreibt die Herstellung von Aluminium-Silicium-Mischoxiden mit einer BET-Oberfläche von 50 bis 200 m²/g und einem Aluminiumoxidgehalt von 65 bis 72,1 Gew.-% Al₂O₃.

EP 1 048 617 beschreibt die Herstellung eines Aluminium-Silicium-Mischoxides mit einer BET-Oberfläche von 5 bis 300 m²/g und einem Aluminiumoxidgehalt von 1 bis 99,999 Gew.-% Al₂O₃ .

Die bekannten Aluminium-Silicium-Mischoxide weisen den Nachteil auf, daß bei Ink-Jet-Drucken der Glanzgrad, die Farbintensität und das Auflösungsvermögen nicht ausreichend ist.

Es besteht somit die Aufgabe, ein Aluminium-Silicium-Mischoxid herzustellen, das diese Nachteile nicht aufweist.

Gegenstand der Erfindung sind pyrogen hergestellte Aluminium-Silicium-Mischoxide, die dadurch gekennzeichnet sind, dass sie eine BET-Oberfläche von 310 bis 330 m²/g und eine Zusammensetzung von 0,91 bis 0, 93 Gew.-% Al₂O₃, Rest SiO₂ aufweisen, und die dadurch erhältlich sind, dass man verflüchtigbare Verbindungen des Aluminiums und des Siliciums verdampft, die Dämpfe in dem Verhältnis, das die gewünschte Zusammensetzung des Mischoxides ergibt, miteinander vermischt und diese Mischung in einer Flamme, die mit Wasserstoff und Sauerstoff gespeist wird, umsetzt.

EP 995718 beschreibt ein mittels Aerosol mit Aluminiumoxid dotiertes pyrogen hergestelltes Siliciumdioxid. Es wird hergestellt, indem man bei der Flammenhydrolyse ein wässriges Aerosol eines Aluminiumsalzes in die Reaktion einbringt. Es wird dort kein pyrogen hergestelltes Aluminium-Silicium-Mischoxid beschrieben, bei dessen Herstellung verflüchtigbare Verbindungen des Aluminiums und des Siliciums verdampft und dann in einer Wasserstoff-Sauerstoff-Flamme pyrolytisch umgesetzt werden und das eine BET-Oberfläche von 310 bis 330 m²/g und eine Zusammensetzung von 0,91 bis 0,93 Gew.-% Al₂O₃, Rest SiO₂ aufweist.

Die erfindungsgemäßen Aluminium-Silicium-Mischoxide mit einer spezifischen BET-Oberfläche über 300 m²/g sind hervorragend geeignet zur Herstellung von Dispersionen beziehungsweise von Streichfarben, die bei der weiteren Verarbeitung zu Inkjet-Medien (Ink-Jet-Papier, Ink-Jet-Folie) zu exzellenten anwendungstechnischen beziehungsweise drucktechnischen Eigenschaften führen.

Die erfindungsgemäßen hochoberflächigen Aluminium-Silicium-Mischoxide haben aufgrund ihres gegenüber reinem pyrogenen Siliciumdioxid unterschiedlichen chemischen Aufbaus auch andere physikalisch-chemische Eigenschaften, die sich bei der Herstellung der Dispersion beziehungsweise dem Drucken bemerkbar machen.

So lassen sich aus den erfindungsgemäßen Aluminium-Silicium-Mischoxiden hoher Oberfläche wäßrige Dispersionen herstellen, die zu Streichfarben verarbeitet werden, die auf Papier oder Folie aufgebracht werden, und dann mit einem Inkjet-Drucker bedruckt werden können und zu exzellenten Druckergebnissen führen.

Ein weiterer Gegenstand der Erfindung sind Dispersionen, die dadurch gekennzeichnet sind, daß sie aus einer flüssigen Phase, vorzugsweise Wasser, und einer festen Phase bestehen, wobei die feste Phase aus einem erfindungsgemäßen pyrogenen Mischoxid besteht, wobei bevorzugt dessen BET-Oberfläche zwischen mehr als 300 und unter 600 m²/g liegt, und dessen Hauptkomponente Siliciumdioxid ist und der andere Bestandteil ein Aluminiumoxid ist, wobei die Menge des Aluminiumoxids zwischen 0,01 und 99,99 Gew.-% liegt, wobei die feste Phase in der Dispersion einen Gewichtsanteil zwischen 0,001 und 80 Gew.-% hat.

Erfindungsgemäß können als Dispergieraggregate zum Beispiel Dissolver, Kugel-, Kegel-, Perl-, Strahl- und Hochdruckflüssigkeitsstrahlmühlen verwendet werden.

Für andere Anwendungsbereiche, zum Beispiel beim Einsatz der Dispersionen als Poliermittel (CMP-Polishing) kann die Durchführung der Dispergierung im neutralen und/oder alkalischen pH-Bereich unter Verwendung von Laugen, zum Beispiel Kaliumhydroxid-Lösung, sinnvoll sein.

Es können auch andere Bindemittel als Polyvinylalkohol (PVA) in Kombination mit PVA oder alleine eingesetzt werden, wie zum Beispiel Polyvinylpyrrolidone, Polyvinylacetate, Styrol-Acrylat-Latices, Polyacrylate, Stärke, Kasein, Gelatine und auch in anderen Massenverhältnissen zum pyrogenen Mischoxid als in Beispiel 3 genannt, eingesetzt werden.

Sowohl der Feststoffgehalt der Dispersion als auch der Feststoffgehalt der Streichfarbe können im Vergleich zu Beispiel 3 variiert werden. Weitere Variationsmöglichkeiten bestehen in der Veränderung des pH-Wertes, der Art der Dispergierung, der Zusammensetzung der Streichfarbenformulierung und des Mediums der Dispersion.

Zur Erhöhung der Wasserfestigkeit des Bindersystems und somit der Beschichtung können Vernetzer wie zum Beispiel Zirkonoxide, Borsäure, Melaminharze, Glyoxal und Isocyanate und andere Moleküle, die die Molekülketten des Bindersystems miteinander verbinden, verwendet werden.

Des weiteren können Hilfsmittel, wie optische Aufheller, Entschäumer, Netzmittel, pH-Puffer, UV- Absorber und Viskositätshilfsmittel eingesetzt werden.

Als Beispiele für kationische Substanzen zur Kationisierung des Binders beziehungsweise der Dispersion des pyrogenen Mischoxids beziehungsweise Oxids sind zu erwähnen: Polyethylenimin, Polyallylamine, Polyvinylamine, Polymere bestehend aus kationischen Monomeren, wie primären, sekundären und tertiären Aminen, die an den Seitenketten liegen und quarternäre Ammonium-Verbindungen.

Bei der Verwendung in Ink-Jet-Medien und für eine fotorealistische Wiedergabe sind folgende Kriterien wichtig: Hoher Glanz; hohe Farbintensität und hohe Auflösung.

Das erfindungsgemäße hochoberflächige Aluminium-Silicium-Mischoxid zeichnet sich gegenüber einem bekannten reinen pyrogenen Siliciumdioxid gleicher BET-Oberfläche (kommerziell erhältlich als Aerosil 300 der Fa. Degussa AG) durch eine verbesserte (d.h. einfachere) Dispergierbarkeit und deutlich verbesserte Druck- und Farbwiedergabeeigenschaften bei der Anwendung als Komponente in Inkjet-Beschichtungen aus.

Gegenüber einem bekannten Aluminium-Silizium-Mischoxid mit geringerer Oberfläche (kommerziell erhältlich als MOX 170 der Fa. Degussa AG) zeigen die erfindungsgemäßen Mischoxide bei der Inkjet-Beschichtung eine Erhöhung des Glanzgrades und ein höheres Auflösungsvermögen.

### Beispiel 1: Herstellung des erfindungsgemäßen pyrogenen Mischoxids.

In einem Brenner bekannter Bauart werden 48 Nm³/h Kernoder Reaktionswasserstoff zusammen mit 195 Nm³/h Luft und 135 kg/h zuvor verdampftem SiCl₄ vermischt. In diese Mischung werden weiterhin 1,2 kg/h gasförmiges AlCl₃, das zuvor bei etwa 300°C verdampft wurde eingespeist. Diese Mischung wird in einem Flammrohr verbrannt, wobei durch Anlegen eines Unterdruckes in dieses Flammrohr zusätzlich ca. 50 Nm³/h Luft mit eingesogen werden.

Nach dem Passieren des Flammrohrs wird das entstandene Pulver in einem Filter oder Zyklon von den salzsäurehaltigen Gasen getrennt. Eventuell noch anhaftende Salzsäurereste werden durch Behandlung bei erhöhter Temperatur von dem pyrogenen Mischoxid entfernt. Das erhaltene Aluminium-Silicium-Mischoxid weist die folgenden physikalisch-chemischen Kenndaten auf:

| | |
|---|---|
| BET m²/g | 310 - 330 |
| pH (4%-wäßr. Dis.) | 3,8 - 3,9 |
| Stampfdichte g/l | ca. 50 |
| Chloridgehalt ppm | < 250 |
| Al₂O₃-Gehalt Gew.-% | 0,91- 0,93 |

Als Vergleichsprodukte werden die kommerziell erhältlichen pyrogenen Oxide Aerosil 300 (Fa. Degussa AG) und MOX 170 (Fa. Degussa AG) verwendet. Die Tabelle 1 gibt die Kenndaten der Oxide wieder.

**Tabelle 1: Physikalisch-chemische Kenndaten des pyrogenen Mischoxids gemäß Beispiel 1 und Vergleichsbeispiele**

| | Erfindungsgemäßes pyrogenes Mischoxid gemäß Beispiel 1 | Vergleichsbeispiel Aerosil 300 | Vergleichsbeispiel Aerosil MOX 170 |
|---|---|---|---|
| BET m²/g | 310 - 330 | 300 ± 30 | 170 ± 30 |
| pH (4%-wäßrige Disp.) | 3,8 - 3,9 | 3,7 - 4,7 | 3,4 -4,5 |
| Stampfdichte g/l | ca. 50 | 50 | 50 |
| Chloridgehalt ppm | < 250 | < 250 | < 250 |
| Al₂O₃-Gehalt Gew.-% | 0,91 - 0,93 | <0,05 | 0,3 - 1,3 |
| SiO₂-Gehalt Gew.-% | 99,07 - 99,09 | >99,8 | >98,3 |

### Beispiel 2: Herstellung von wäßrigen Dispersionen

Dispersion A ist eine 20-prozentige (w = 0,20) wäßrige Dispersion, die das pyrogene Oxid, beziehungsweise das pyrogene Mischoxid, enthält. Dieses wird durch einen Dissolver bei 1000 Umdrehungen pro Minute (UpM) in Wasser, welches mit 1,25 Massenprozenten Essigsäure (bezogen auf die Gesamtdispersion) versetzt ist, eingearbeitet. Durch 60-minütiges Dispergieren des pyrogenen Mischoxids oder des Oxids mit einem Rotor-Stator-System bei 10000 UpM in einem wassergekühlten Doppelmantelsystem und gleichzeitigem Beibehalten des pH-Wertes wird die Dispersion fertiggestellt.

Das pyrogene Mischoxid gemäß Beispiel 1 und das Aerosil MOX 170 lassen sich im Vergleich zu reinem pyrogenen Siliciumdioxid (Aerosil 300) deutlich besser in Wasser einarbeiten und haben eine geringere Verdickungswirkung, d.h. die Dispersionen weisen eine niedrigere Viskosität auf.

Die Teilchengrößenverteilung der so hergestellten Dispersionen wird mit Hilfe eines Laserbeugungsgerätes (Horiba LB-500) gemessen. Der d₅₀-Wert dieser Dispersionen ist in Tabelle 2 aufgeführt.

**Tabelle 2: d₅₀-Werte der Dispersionen hergestellt nach Beispiel 2.**

| | Erfindungsgemäßes pyrogenes Mischoxid gemäß Beispiel 1 | Aerosil 300 | Aerosil MOX 170 |
|---|---|---|---|
| d₅₀-Wert nm | 71 | 121 | 170 |

Die leichtere Dispergierbarkeit des erfindungsgemäßen Mischoxids ist am kleineren d₅₀-Wert erkennbar.

Ausgehend von diesen 20-prozentigen wäßrigen Dispersionen werden Inkjet-Streichfarben hergestellt.

### Beispiel 3: Rezeptur zur Herstellung einer pyrogenen Mischoxid-Dispersion und einer Inkjet-Streichfarbe:

Es werden die Dispersionen A gemäß Beispiel 2 und die Lösung B verwendet.

Lösung B ist eine (bezogen auf PVA) 10-prozentige wäßrige Dispersion von Polyvinylalkohol (Feststoff, Abkürzung PVA) Mowiol 40-88 der Fa. Clariant.

Die Dispersion A und die Lösung B werden innerhalb von 10 Minuten unter Rühren bei 500 UpM mit einer Dissolver-Scheibe zu einer Dispersion C zusammengefügt.

Die Dispersion A und die Lösung B werden so gemischt, daß sich in der späteren Dispersion C ein Massenverhältnis von 100:70 von Aerosil (beziehungsweise pyrogenes Mischoxid) zu PVA ergibt.

Im Falle einer 20-prozentigen Dispersion A wird diese mit der Lösung B im Gewichtsverhältnis 1,40:1 gemischt um das Massenverhältnis (100:70 der Feststoffe) zu erzielen. Weiterhin wird (falls erforderlich) so viel Wasser zugefügt, daß sich eine - bezogen auf die Summe der Feststoffe (pyrogenes Mischoxid beziehungsweise Oxid + PVA) - 9,6 bis 10,9-prozentige Dispersion C, abhängig vom verwendeten pyrogenen Mischoxid beziehungsweise Oxid ergibt.

Die hier verwendete Rezeptur ist nur als eine Modellrezeptur für eine Inkjet-Rezeptur zu verstehen.

Bei der weiteren Verarbeitung der Streichfarbe wird zur Zerstörung vorhandener Luftblasen in der Dispersion die Streichfarbe mittels Anlegen eines Unterdruckes in einem Exsikkator entlüftet, wobei der Unterdruck beispielsweise mit einer Wasserstrahlpumpe erzeugt werden kann.

Die Viskosität dieser Dispersion C, der Inkjet-Streichfarbe, wird nach 24 h mittels eines Brookfield-Viskosimeters gemessen.

**Tabelle 3: Viskosität und Feststoffgehalt der Dispersion C (Ink-Jet-Streichfarbe)**

| | Erfindungsgemäßes pyrogenes Mischoxid gemäß Beispiel 1 | Aerosil 300 | Aerosil MOX 170 |
|---|---|---|---|
| Feststoffgehalt der Streichfarbe (pyrogenes Oxid + PVA) Gew.-% | 9,8 | 9,6 | 10,9 |
| Viskosität (mPa s) bei 100 UpM | 616 | 573 | 521 |

Die Streichfarben der Tabelle 3 werden mit Hilfe eines profilierten Rakelstabes auf eine unbehandelte Polyesterfolie (Dicke 100 Mikrometer) aufgetragen. Die Naßfilmdicke der Streichfarbe beträgt 120 Mikrometer. Die Beschichtung wird bei 105 °C für 8 Minuten getrocknet.

Die Folie mit der aufgebrachten Beschichtung wird auf einem Epson Stylus Colour 800 mit höchster Auflösung bedruckt.

Die Bewertung der Druckergebnisse ist in der Tabelle 4 aufgeführt.

**Tabelle 4: Bewertung der Druckergebnisse:**

| Bewertete Eigenschaft | Pyrogenes Mischoxid gem. Beispiel 1 | | Aerosil 300 | | Aerosil MOX 170 | |
|---|---|---|---|---|---|---|
| | Bewertung | Note | Bewertung | Note | Bewertung | Note |
| Glanz | gut | 2 | mangelhaft | 5 | befriedigend | 3 |
| Farbintensität | gut - sehr gut | 1,5 | befriedigend | 3 | Gut - sehr gut | 1,5 |
| Auflösung | Sehr gut | 1 | gut | 2 | Gut - sehr gut | 1,5 |
| Haftung auf Folie | gut | 2 | mangelhaft, da Rißbildung | 5 | gut | 2 |
| Durchschnitt | gut bis sehr gut | 1,63 | ausreichend bis befriedigend | 3,75 | gut | 2 |

| | | | | | | |
|---|---|---|---|---|---|---|
| Beste Note 1, schlechteste Note 6: | | | | | | |

In der Summe aller Eigenschaften der Beschichtungen, insbesondere hinsichtlich des Glanzes, der Farbintensität und der Auflösung, welche wichtige Kriterien für fotorealistische Inkjet-Medien sind, zeigt die mit dem erfindungsgemäßen pyrogenen Mischoxid gemäß Beispiel 1 hergestellte wäßrige Dispersion beziehungsweise die daraus hergestellte Streichfarbe beziehungsweise die daraus wieder erzeugte Beschichtung die mit Abstand besten Ergebnisse bei der Bedruckung mit einem Inkjet-Drucker.

Dies ist um so bemerkenswerter, da es sich bei der Beschichtung um einen Einfachstrich mit einem relativ geringen Beschichtungsauftrag handelt.

Die Beschichtung, die das bekannte Aerosil MOX 170 beinhaltet, hat ebenfalls eine gute Inkjetfähigkeit. Der Glanz ist jedoch geringer als bei der mit dem erfindungsgemäßen pyrogenen hochoberflächigen Mischoxid hergestellten Beschichtung.

Das bekannte Aerosil 300 ergibt bei dieser Streichfarbenformulierung keinen homogenen Film, obwohl die BET-Oberfläche dem erfindungsgemäßen Produkt sehr ähnlich ist.

Der Grund für dieses unterschiedliche Verhalten liegt vermutlich an der besseren Dispergierbarkeit des erfindungsgemäßen pyrogenen Mischoxids, was sich in den kleineren d₅₀-Werten niederschlägt.

## Patentansprüche

1. Pyrogen hergestellte Aluminium-Silicium-Mischoxide, **dadurch gekennzeichnet, dass** sie eine Beet-oberfläche von 310 bis 330 m²/g und eine Zusammensetzung von 0,91 bis 0,93 Gew.-% Al₂O₃, Rest SiO₂ aufweisen, und die **dadurch** erhältlich sind, dass man verflüchtigbare Verbindungen des Aluminiums und des Siliciums verdampft, die Dämpfe in dem Verhältnis, das die gewünschte Zusammensetzung des Mischoxides ergibt, miteinander vermischt und diese Mischung in einer Flamme, die mit Wasserstoff und Sauerstoff gespeist wird, umsetzt.

2. Dispersionen, die **dadurch gekennzeichnet sind, dass** sie aus einer flüssigen Phase und einer festen Phase bestehen, wobei die feste Phase aus einem pyrogenen Mischoxid gemäß Anspruch 1 besteht, wobei die feste Phase in der Dispersion einen Gewichtsanteil zwischen 0,001 und 80 Gewichtsprozent hat.

3. Verwendung der pyrogen hergestellten Aluminium-Silicium-Mischoxide gemäß Anspruch 1 und/oder der Dispersion gemäß Anspruch 2 zur Herstellung von Streichfarben, insbesondere für Inkjet-Papiere oder Inkjet-Folien oder sonstigen Inkjet-Materialien, als keramischen Grundstoff, in der Elektronikindustrie, als Poliermittel (CMP-Anwendungen), in der Kosmetikindustrie, in der Silikon- und Kautschukindustrie, zur Einstellung der Rheologie von flüssigen Systemen, als Ausgangsstoff zur Herstellung von Glas oder Glasbeschichtungen oder Schmelztiegeln, in der Dentalindustrie, in der pharmazeutischen Industrie, bei PET-Film-Anwendungen, als Ausgangsstoff zur Herstellung von Filterkeramiken oder Filtern, als Rostschutzmittel, in Tinten und Batterieseparatoren, als Katalysator oder Katalysatorträgermaterial, in Lacken und Farben, in Tonern oder in Tonerpulvern, als Sonnenschutz, als Trennmittel oder Trenmhilfsmittel, zur Hitzeschutzstabilisierung, in Fluoreszenz-Röhren, als Mittel zum Film-Coaten von Polyethylen (PET) und Polyvinylacetat, als Füllstoff, als Füllstoff für Polymere, als Adsorbens in der Lebensmittelindustrie.

## Claims

1. Pyrogenic aluminium-silicon mixed oxides, **characterized in that** they have a BET surface area of 310 to 330 m²/g and a composition of 0.91 to 0.93% by weight of Al₂O₃, remainder SiO₂, and which are obtainable by vaporizing vaporizable compounds of aluminium and of silicon, mixing the vapours with one another in a ratio which gives the desired composition of the mixed oxide, and converting this mixture in a flame which is fed with hydrogen and oxygen.

2. Dispersions which are **characterized in that** they consist of a liquid phase and a solid phase, said solid phase consisting of a pyrogenic mixed oxide according to Claim 1, the solid phase in the dispersion having a proportion by weight between 0.001 and 80 per cent by weight.

3. Use of the pyrogenic aluminium-silicon mixed oxides according to Claim 1 and/or of the dispersion according to Claim 2 for production of coating slips, especially for inkjet papers or inkjet films or other inkjet materials, as a ceramic base material, in the electronics industry, as a polishing agent (CMP applications), in the cosmetics industry, in the silicone and rubber industry, for adjustment of the rheology of liquid systems, as a starting material for production of glass or glass coatings or melting crucibles, in the dental industry, in the pharmaceutical industry, in PET film applications, as a starting material for production of filter ceramics or filters, as an antirust agent, in inks and battery separators, as a catalyst or catalyst support material, in paints and dyes, in toners or in toner powders, as sunscreen, as a separating agent or separating aid, for heat stabilization, in fluorescent tubes, as an agent for film coating of polyethylene (PET) and polyvinyl acetate, as a filler, as a filler for polymers, as an adsorbent in the foods industry.

## Revendications

1. Oxydes mixtes d'aluminium-silicium préparés par pyrogénation, **caractérisés en ce qu'**ils présentent une surface BET de 310 à 330 m²/g et une composition de 0,91 à 0,93 % en poids de Al₂O₃, le reste étant constitué de SiO₂, et qui peuvent être obtenus par vaporisation de composés volatils de l'aluminium e du silicium, mélange entre elles des vapeurs en le rapport donnant la composition désirée de l'oxyde mixte et mise en réaction de ce mélange dans une flamme qui est alimentée par de l'hydrogène et de l'oxygène.

2. Dispersions, qui sont **caractérisées en ce que** qu'elles consistent en une phase liquide et une phase solide, la phase solide consistant en un oxyde mixte pyrogéné selon la revendication 1, la phase solide ayant dans la dispersion une concentration en poids comprise entre 0,001 et 80 % en poids.

3. Utilisation des oxydes mixtes d'aluminium-silicium préparés par pyrogénation selon la revendication 1 et/ou de la dispersion selon la revendication 2, pour la production de sauces de couchage, en particulier pour des papiers pour impression jet d'encre ou des films pour impression jet d'encre ou d'autres matériaux pour impression jet d'encre, en tant que matière première céramique, dans l'industrie de l'électronique, comme agent de polissage [applications CMP (polissage chimique-mécanique)], dans l'industrie des cosmétiques, dans l'industrie des caoutchoucs et silicones, pour l'ajustement des propriétés rhéologiques de systèmes liquides, comme produit de départ dans la production du verre ou de revêtements en verre ou de creusets, dans l'industrie dentaire, dans l'industrie pharmaceutique, dans des applications de films de PET, comme produit de départ dans la fabrication de céramiques filtrantes ou de filtres, comme antirouille, dans des encres et des séparateurs de batteries, en tant que catalyseur ou matière de support de catalyseur, dans des peintures et vernis, dans des toners ou dans des poudres de toners, comme protection antisolaire, comme agent de séparation ou adjuvant de séparation, dans la stabilisation de la protection thermique, dans des tubes fluorescents, comme agent pour le pelliculage de polyéthylène (PET) et poly(acétate de vinyle), en tant que charge, en tant que charge pour polymères, en tant qu'adsorbant dans l'industrie alimentaire.
